# EUROPEAN PATENT SPECIFICATION

(11) **EP 1 939 422 B1**
(45) Date of publication and mention of the grant of the patent: **05.01.2011**
(21) Application number: 06822020.1
(22) Date of filing: 17.10.2006
(51) Int. Cl.: F01N 3/24, B01D 53/94, F01N 3/02, F01N 3/08, F02D 21/08, F02D 41/02, F02D 41/04, F02D 41/38, F02D 45/00, F02M 25/07

(54) **EXHAUST GAS PURIFIER FOR DIESEL ENGINE**
ABGASREINIGER FÜR EINEN DIESELMOTOR
ÉPURATEUR DES GAZ D'ÉCHAPPEMENT POUR MOTEUR DIESEL

(30) Priority: 19.10.2005 JP 2005303873
(43) Date of publication of application: 02.07.2008
(73) Proprietor: Isuzu Motors Limited, Tokyo 140-8722 (JP)
(72) Inventor: MINAMI, Toshitaka, Fujisawa-shi, Kanagawa 252-8501 (JP)
(74) Representative: Erny, Tobias
(86) International application number: PCT/JP2006/320995
(87) International publication number: WO 2007/046518

(56) References cited:
- EP-A2- 1 260 684
- JP-A- 2000 130 216
- JP-A- 2002 349 241
- JP-A- 2003 003 830
- JP-A- 2003 184 542
- JP-A- 2004 316 545
- JP-A- 2005 051 893

## Description

### Technical Field

The present invention relates to a device for purifying exhaust gas of a diesel engine by removing particulate matter (PM) and nitrogen oxides (NOx) from the exhaust gas.

### Background Art

Stringent regulations have now been imposed on the exhaust gases from the engines of vehicles and, particularly, from the diesel engines and it is expected that more stringent regulations will be imposed in the future. The diesel engine is an engine in which the air fed into a cylinder is compressed and, thereafter, the fuel is injected therein so as to be combusted, and features excellent characteristics in that the thermal efficiency is, generally, higher than that of gasoline engines and, therefore, emits carbon dioxide (CO₂) in amounts decreased correspondingly. However, it has been strongly urged to reduce the amounts of particulate matter (PM) consisting of particles of unburned components and the like and nitrogen oxides (NOx).

As a device for removing the PM from the exhaust gas of the diesel engine, a diesel particulate filter (hereinafter referred to as "DPF") for trapping the PM by using a filter has been known and put into practical use. The trapped PM deposits on the DPF as the engine is repetitively operated, and it becomes necessary to regenerate the DPF by burning the trapped PM. In order to regenerate the DPF in recent years, attention has been given to a system in which an oxidizing catalyst is disposed upstream of exhaust gas of the DPF and the PM trapped in the DPF is continuously oxidized and removed while the engine is in operation to regenerate the DPF (hereinafter called "continuously regenerating DPF"). An example of the continuously regenerating DPF has been disclosed in Japanese Patent No. 3012249.

The continuously regenerating DPF can be continuously regenerated while the diesel engine is in operation without being provided with a heater for heating , however, being subjected to a limitation on the function for regenerating the DPF depending upon the temperature of the oxidizing catalyst. That is, in a region where the temperature of the oxidizing catalyst is nearly 250°C to 400°C, NO in the exhaust gas is oxidized to form NO₂ with which the PM trapped on the DPF can be oxidized and removed. At higher temperatures, further, the PM undergoes the oxidation reaction with oxygen in the exhaust gas due to the catalytic action to thereby regenerate the DPF. As the temperature of the oxidizing catalyst becomes lower than about 250°C, however, the oxidizing action is no longer effected to a sufficient degree. In a temperature region where the exhaust gas of the diesel engine is lower than about 250°C, therefore, the DPF continues to trap the PM without being regenerated. If the oxidation of PM occurs in a state where the PM has been deposited in large amounts, then the reaction proceeds at one time in the DPF arousing a problem of conspicuously shortening the durability of the filter.

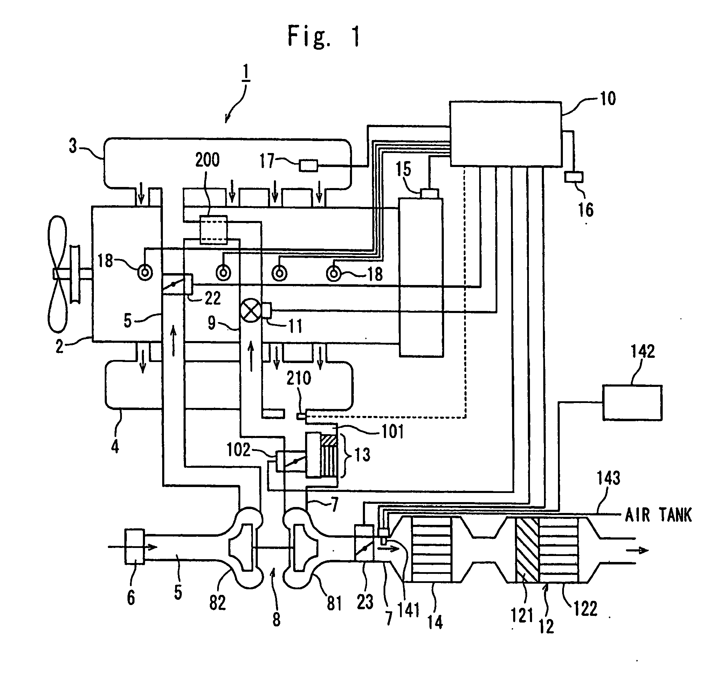

To cope with the above problem in the continuously regenerating DPF, the present applicant has proposed in Japanese Patent Application No. 2003-403714 (JP-A-2005-163630) a device for purifying exhaust gas of a diesel engine wherein the exhaust gas passage of the diesel engine having a continuously regenerating DPF is provided, on the upstream side thereof, with a by-path for by-passing the exhaust gas passage and with a second continuously regenerating DPF of a small capacity, and in a region where the exhaust gas temperature of the diesel engine is low, an exhaust gas temperature-elevating means is actuated and the exhaust gas is passed through the second continuously regenerating DPF. The second continuously regenerating DPF disposed in the by-path of the diesel engine proposed above has the constitution same as that of the diesel engine of the present invention illustrated in Fig. 1.

The above-proposed diesel engine employs a so-called cool EGR technology which cools the exhaust gas of the engine and recirculates it into the intake passage to reudce NOx in combination with a so-called internal EGR technology which is an exhaust gas introduction mechanism for flowing the exhaust gas back into the cylinder during the intake stroke. By controlling them depending upon the exhaust gas temperature, it is made possible to reduce the PM and NOx to meet the operation conditions of the diesel engine.

As a technology for suppressing the PM that generates in the step of combustion in the diesel engine, a combusting method called homogeneous charge compression ignition (HCCI) is now drawing attention and has been developed. The HCCI is a combusting method in which the fuel is injected at a slightly early timing into the cylinder of the diesel engine, and is compressed in the state of being mixed with the air in advance so that the combustion is quickly completed after the compression ignition has taken place, and offers great advantages in preventing the formation of unburned components such as the PM and the like and in improving the thermal efficiency. A die.sel engine having the HCCI combusting system has been disclosed in, for example, JP-A-2003-138952.

The diesel engine disclosed in the above JP-A-2005-163630 proposed by the present applicant is capable of favorably trapping and regenerating the PM by the second continuously regenerating DPF disposed in the by-path in the operation region where the exhaust gas temperature is low, and works to reduce the emission of PM from a region where the exhaust gas temperature is low through up to a region where the exhaust gas temperature is high while preventing such an occurrence that the PM is deposited in excess amounts on the first continuously regenerating DPF which is a principal PM-removing device. In order to reduce NOx, further, the above diesel engine is employing the cool EGR which cools the exhaust gas through a cooling device disposed in the EGR passage and recirculates it into the intake pipe and, further, controls the amount of recirculation depending upon the operation conditions of the engine to decrease the PM and NOx simultaneously over a wide range of operation of the engine.

However, the load on the diesel engine that drives a vehicle greatly varies due to various factors, and the NOx and PM often generate in large amounts depending thereupon. In particular, the NOx generates in increased amounts at the time of acceleration. Here, if volume of the exhaust gas recirculated by the cool EGR is excessively increased, then accidental fire may easily occur. Therefore, it arise limit to cope by the EGR technology. In order to further and reliably reduce the NOx of the diesel engine over the whole region of operation, it is desired to install a catalyst for decomposing the NOx in the exhaust gas system.

A well-known catalyst for decomposing the NOx is a NOx-reducing catalyst (hereinafter referred to as "urea-added SCR catalyst") in which urea is added to the exhaust gas to use ammonia generated by the hydrolysis as a reducing agent for a selective reduction catalyst. Though use of the urea-added SCR catalyst makes it possible to reliably reduce the NOx, it becomes necessary to store in a tank or the like the urea to be injected into the exhaust gas of the diesel engine. Since the urea is gradually consumed while the diesel engine is in operation, it is necessary to store the urea in large amounts for the operation for extended periods of time.

Besides, according to the diesel engine disclosed in the above JP-A-2005-163630, the PM is trapped and regenerated by the second continuously regenerating DPF disposed in the by-path in the operation region where the exhaust gas temperature is low and, the second continuously regenerating DPF must have a capacity as small as possible so that its temperature can be quickly elevated. However, the DPF of a small capacity is likely to be loaded with the PM if the PM is formed in large amounts. Besides, the PM that has deposited may burn at one time causing damage due to burning.

The problem of the present invention, therefore, is to favorably reduce the NOx and PM in various operation regions of a diesel engine by solving the above-mentioned problem inherent in the diesel engine disclosed in JP-A-2005-163630 proposed by the present applicant.

### Disclosure of the Invention

In view of the above problem, the present invention attempts to reliably reduce the NOx by disposing a urea-added SCR catalyst in the engine exhaust gas system and, at the same time, attempts to reduce the PM by utilizing the technology of homogeneous charge compression ignition system (HCCI) in the operation region where the exhaust gas temperature is low. That is, the present inventors have discovered that very excellent effects are exhibited when the HCCI technology is applied to the diesel engine of the above JP-A-2005-163630, and have completed the present invention by intricately adopting the HCCI technology. Concretely speaking as recited in claim 1, the present invention is constituted as described below.

"In a diesel engine comprising:
a first continuously regenerating DPF disposed in the exhaust gas passage of the engine, a second continuously regenerating DPF disposed in a by-path by-passing the exhaust gas passage on the upstream of the first continuously regenerating DPF and having a capacity smaller than that of the first continuously regenerating DPF, and a change-over valve disposed in the exhaust gas passage between the outlet and the inlet of the by-path to change over the flow passage of the exhaust gas; and
an EGR device for recirculating the cooled exhaust gas into the intake air passage of the engine through an EGR valve that controls the recirculating amount of the exhaust gas and a cooler that cools the exhaust gas, and an exhaust gas introduction mechanism which enables the exhaust gas outlet of the engine to be communicated with the cylinders of the engine for a short period of time in the engine intake stroke;
wherein, in a region of low exhaust gas temperatures where the engine exhaust gas temperature is low, the opening degree of the change-over valve is decreased so that the exhaust gas flows into the second continuously regenerating DPF;
a device for purifying exhaust gas of the diesel engine characterized in that:
   in the region of low exhaust gas temperatures, the timing for injecting the fuel into the diesel engine is advanced ahead of the injection timing in other temperature regions and the EGR valve is opened to recirculate the exhaust gas from the EGR device and from the exhaust gas introduction mechanism; and
   a NOx-reducing catalytic device equipped with a urea-feeding device is disposed in the exhaust gas passage, and urea is fed to the NOx-reducing catalytic device in the regions other than the region of low exhaust gas temperatures."

Here, the "continuously regenerating DPF" stands for the one which, as described above, is fabricated by a combination of an oxidizing catalyst and a DPF, and in which the PM deposited on the DPF is continuously oxidized and removed by the action of the catalyst when the engine is in operation.

In the diesel engine of the invention constituted as described above, the second continuously regenerating DPF is disposed in the by-path, and the exhaust gas is passed through the by-path in the operation region where the exhaust gas temperature is low (region of low exhaust gas temperatures) so that the PM is trapped by the DPF. The second continuously regenerating DPF has a small capacity and is disposed near the outlet of the engine exhaust gas. Accompanying a rise in the exhaust gas temperature, therefore, the second continuously regenerating DPF is heated up to a catalyst activating temperature quicker than the first continuously regenerating DPF, and the trapped PM is favorably oxidized and removed preventing such an occurrence that the PM is deposited excessively on the first continuously regenerating DPF that is the principal PM-removing device. Besides, upon executing the cool EGR for recirculating the cooled exhaust gas into the intake air passage, the NOx formed in the step of combustion can be greatly reduced. The above action and effect are common to those of the diesel engine disclosed in the above JP-A-2005-163630.

The diesel engine of the invention executes the HCCI combustion by advancing the timing for injecting the fuel into the cylinders in the region of low exhaust gas temperatures and by compressing the fuel in a state where it has been mixed with the air in advance so as to be ignited by compression. In the HCCI combustion, the combustion is quickly completed after the ignition, and the unburned component such as PM is little formed. Therefore, the PM is trapped in much reduced amounts by the second continuously regenerating DPF in the region of low exhaust gas temperatures as compared to the ordinary combustion system in the diesel engine, i.e., as compared to the diffusion combustion system in which the fuel is injected near the top dead center so as to be mixed with the air of a high temperature and burns gradually. Therefore, the PM is reliably trapped despite the DPF has a small capacity. Besides, as the temperature of the exhaust gas rises, the oxidizing catalyst in the second continuously regenerating DPF of the small capacity is quickly activated to quickly oxidize and remove the PM that is trapped.

The HCCI combustion, generally, involves a difficulty in controlling the ignition timing for effecting the ignition by compression and causes an early ignition. According to the present invention, on the other hand, the cool EGR controls the amount of the exhaust gas recirculated into the cylinder to normalize the ignition timing. Further, the diesel engine of the present invention is equipped with an exhaust gas introduction mechanism based on an internal EGR for communicating the exhaust gas outlet with the cylinders of the engine for a short period of time in the engine intake stroke. The exhaust gas refluxing from the exhaust gas introduction mechanism is the exhaust gas right after the exhaust gas outlet and has a high temperature and contains the combustion intermediate product. Since the exhaust gas stays near the cylinder head over the combustion chamber, the HCCI combustion of the invention promotes the combustion after the premixed mixture is ignited; i.e., executes the combustion forming PM in further reduced amounts.

According to the diesel engine of the invention as described above, the exhaust gas is recirculated into the cylinders by the cool EGR and is introduced therein by the internal EGR even in the region of low exhaust gas temperatures, suppressing the formation of NOx in the region of low exhaust gas temperatures. Therefore, the urea-added SCR catalyst disposed in the exhaust gas passage of the diesel engine of the invention does not have to be activated in the region of low exhaust gas temperatures saving urea correspondingly that is added while the engine is in operation and making it possible to reduce the amount of urea stored in the urea tank.

As recited in claim 2, it is desired that the diesel engine employs a common-rail type fuel injection device and in the region of low exhaust gas temperatures, the timing for injecting the fuel into the diesel engine is set in a range of 30° to 20° ahead of the top dead center. The common-rail type fuel injection device injects the fuel from a fuel storage tube of a high pressure called common rail being controlled by an electromagnetic valve, and makes it possible to correctly control the amount of fuel injected into the diesel engine and the injection timing. When the HCCI combustion is executed in the diesel engine having the EGR device of the present invention, further, the injection timing does not have to be very advanced but may be suitably set in a range of 30° to 20° ahead of the top dead center.

As recited in claim 3, further, it is desired that the diesel engine employs a common-rail type fuel injection device and in the regions other than the region of low exhaust gas temperatures, the main injection is executed to the diesel engine near the top dead center and a pilot injection is executed at a moment 10° to 20° ahead of the main injection. With the fuel injection being divided into the main injection and the pilot injection, a combustion is realized with less noise and forming less PM and NOx yet maintaining a favorable thermal efficiency.

As recited in claim 4, a urea-added SCR catalyst can be disposed in the exhaust gas passage upstream of the first continuously regenerating DPF but downstream of the second continuously regenerating DPF. In this case, the urea-added SCR catalyst is disposed in the exhaust gas passage at a place where the temperature is relatively high offering advantage for activating the SCR catalyst.

As recited in claim 5, the diesel engine has an intake air shutter and an exhaust gas shutter disposed in the intake air passage and in the exhaust gas passage, and in the region of low exhaust gas temperatures, the opening degrees of the intake air shutter and of the exhaust gas shutter are decreased to squeeze the intake air passage and the exhaust gas passage. Therefore, the excess air ratio of the engine decreases, the temperature of the exhaust gas increases, and the second continuously regenerating DPF disposed in the by-path can be quickly activated. As recited in claim 6, further, it is desired to so control that the opening degree of the change-over valve is increased in the regions other than the region of low exhaust gas temperatures, the opening degrees of the intake air shutter and of the exhaust gas shutter are increased to become larger than those in the region of low exhaust gas temperatures in a region of intermediate exhaust gas temperatures where the exhaust gas temperature of the engine is higher than that in the region of low exhaust gas temperatures, and the intake air shutter and the exhaust gas shutter are fully opened in a region of high exhaust gas temperatures where the exhaust gas temperature of the engine is in excess of that in the region of intermediate exhaust gas temperatures. In this case, the amount of the cool EGR for excellently decreasing the NOx can be easily optimized depending upon the region of the exhaust gas temperatures of the diesel engine, i.e., depending upon the operation conditions. By effecting fine control relying upon the cool EGR, intake air shutter and exhaust gas shutter, the amount of NOx can be reduced without adversely affecting the operability of the engine or the fuel efficiency.

### Brief Description of the Drawings

Fig. 1 is a view schematically illustrating a device for purifying exhaust gas of a diesel engine based on the invention;
Fig. 2 is a view illustrating an embodiment of an exhaust gas introduction mechanism according to the invention;
Fig. 3 is a diagram illustrating exhaust gas characteristics in the pre-mixture combustion according to the invention;
Fig. 4 is a map of exhaust gas temperature regions according to the invention; and
Fig. 5 is a Table showing control modes depending upon the exhaust gas temperature regions according to the invention.

### Best Mode for Carrying Out the Invention

The device for purifying exhaust gas of a diesel engine embodying the invention will now be described with reference to the drawings.

Referring, first, to Fig. 1 which schematically illustrates the whole diesel engine 1 of the present invention, an engine body 2 comprising a cylinder block and a cylinder head includes an intake manifold 3 that constitutes a portion of an intake air passage 5 and an exhaust gas manifold 4 that constitutes a portion of an exhaust gas passage 7 . Anaircleaner 6 for cleaning the intake air is disposed at the most upstream portion of the intake air passage 5. The intake air cleaned through the air cleaner 6 passes through the intake air passage 5 and is fed into the cylinders through the intake air manifold 3. An exhaust gas passage 7 is connected to the exhaust gas manifold 4, and the exhaust gas formed in the cylinders is discharged through the exhaust gas manifold 4 and the exhaust gas passage 7.

The diesel engine that is shown has a turbo charger 8 for supercharging the intake air. The turbo charger 8 includes an exhaust gas turbine 81 disposed in the exhaust gas passage 7 and an intake air compressor 82 disposed in the intake air passage 5. Though the diesel engine of this embodiment is provided with the turbo charger, the device for purifying exhaust gas of the present invention can also be applied to a normal aspiration engine which takes in the atmospheric pressure, as a matter of course, not being limited to the engine that effects the supercharging relying on the turbo charger or the like charger.

A first continuously regenerating DPF 12 is disposed before the exhaust gas outlet of the exhaust gas passage 7 downstream of the exhaust gas turbine 81, the first continuously regenerating DPF 12 having an oxidizing catalyst 121 on the upstream side and a DPF 122 on the downstream side. Theoxidizing catalyst 121 in the continuously regenerating DPF 12 comprises a coating layer carrying a catalytically active component such as platinum or the like, which is formed on the surface of a honeycomb-shaped substrate, and forms NO₂ by oxidizing NO in the exhaust gas and, further, forms H₂O and CO₂ by oxidizing HC and CO in the exhaust gas. As the DPF 122, there is used a so-called wall-flow-type honeycomb filter in which a number of cells are formed in parallel, and the inlets and outlets of the cells are alternately closed, or a fiber-type filter in which a ceramic fiber is wound in many layers on a stainless steel porous tube to trap the PM in the exhaust gas.

In the continuously regenerating DPF 12 constituted by the oxidizing catalyst 121 and the DPF 122, the oxidizing catalyst 121 oxidizes NO in the exhaust gas into NO₂ in a temperature range in which the temperature of the oxidizing catalyst 121 is about 250 to about 400°C, and the DPF 122 disposed downstream of the oxidizing catalyst 121 oxidizes and removes the trapped PM. Therefore, there is no need of providing a particular heating means such as electric heater or burner, and the continuously regenerating DPF can be constructed simply and in a compact size as a whole offering an advantage. At temperatures as high as 400°C or more, the oxidation reaction takes place between oxygen and PM in the exhaust gas due to the catalytic action to thereby regenerate the DPF. As the continuously regenerating DPF, there have been known a continuously regenerating DPF in which a material that works as an oxidizing catalyst is directly carried on the surface of the DPF so as to be constituted integrally therewith and a continuously regenerating DPF in which a NOx occluding/reducing catalyst is carried on the DPF. Either one of these continuously regenerating DPFs may be used as the continuously regenerating DPF in the present invention.

The exhaust gas passage 7 right after the exhaust gas manifold 4 is provided with a by-path 101 by-passing the exhaust gas passage. In the by-path 101, a second continuously regenerating DPF 13 is disposed having an oxidizing catalyst and a particulate filter like the first continuously regenerating DPF 12. Here, however, the second continuously regenerating DPF 13 has a capacity smaller than the capacity of the first continuously regenerating DPF 12.

A change-over valve 102 for changing over the flow passage of the exhaust gas is disposed in the exhaust gas passage 7 between the inlet and outlet of the by-path 101. The change-over valve 102 is controlled by a control unit 10, and permits the exhaust gas discharged from the exhaust gas manifold 4 to flow through the by-path 101 and the second continuously regenerating DPF 13 if the exhaust gas passage 7 is closed. The constitution and arrangement of the first and second continuously regenerating DPFs are basically the same as those of the diesel engine disclosed in JP-A-2005-163630 proposed by the present applicant.

Further, the diesel engine that is shown has an EGR passage 9 for communicating the exhaust gas passage 7 upstream of the exhaust gas turbine 81 with the intake air passage 5 downstream of the intake air compressor 82. An EGR valve 11 and an exhaust gas cooler 200 are interposed on the way of the EGR passage 9. The exhaust gas cooler 200 cools the exhaust gas of a high temperature recirculating into the intake air passage by exchanging the heat with cooling water for cooling the engine. Upon employing the cool EGR for recirculating the cooled exhaust gas into the intake air passage, the efficiency improves for charging the exhaust gas into the cylinders. Besides, since the exhaust gas temperature is low, the combustion temperature in the cylinders can be greatly lowered, and the effect increases for suppressing the NOx correspondingly. The EGR valve 11 is equipped with, for example, a negative-pressure actuator connected to a negative-pressure tank that is not shown, and is controlled for its opening degree or the EGR ratio as the negative pressure fed depending upon the operation conditions is controlled by the control unit 10 that will be described later.

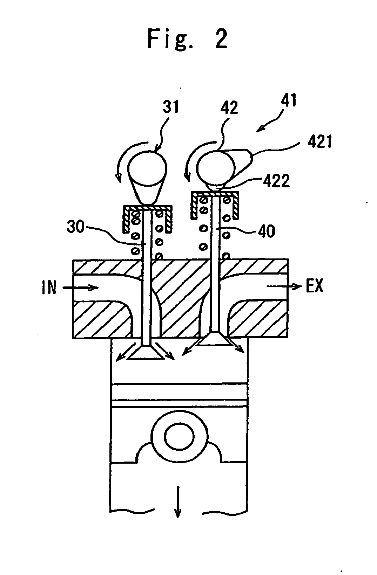

The exhaust valve operation mechanism of the engine is provided with an exhaust gas introduction mechanism 41 which opens the exhaust gas passage of the cylinder to the cylinder during the intake stroke. That is, as shown in Fig. 2, the exhaust cam 42 of the exhaust valve operation mechanism is a two-stepped exhaust cam having a normal cam profile (cam protuberance) 421 that actuates the exhaust valve 40 in the exhaust stroke and an exhaust gas introduction cam profile 422 formed maintaining a phase angle of about 90° behind the above cam profile in the direction of rotation. Due to the exhaust gas introduction cam profile 422 formed on the exhaust cam 42, the exhaust valve 40 is slightly opened during the intake stroke, and the exhaust gas in the exhaust gas outlet flows reverse into the cylinder to effect the so-called internal EGR. In Fig. 2, reference numeral 30 denotes an intake valve and 31 denotes an intake cam. The mechanism for introducing the exhaust gas may also be the one in which the exhaust gas outlet is branched and opened in the cylinder, and a small valve actuated by an electromagnetic valve is provided in the opening so as to be lifted up in the intake stroke.

In the exhaust gas passage 7 of the diesel engine of the invention, a urea-added SCR catalyst 14 is installed upstream of the first continuously regenerating DPF 12 to reduce and decompose the NOx. A urea injector 141 for injecting urea water is provided at the inlet of the urea-added SCR catalyst 14. The urea injector 141 is connected to a urea water pipe from a urea water tank 142 and to a compressed air pipe 143 from an air tank that is not shown. When it is necessary to further reduce the NOx emitted from the cylinders of the diesel engine, the urea water is sprayed from the urea injector 141 to execute the reducing action by the urea-added SCR catalyst 14.

The diesel engine of this embodiment has an intake air shutter 22 disposed in the intake air passage 5 upstream of a portion where the EGR passage 9 is coupled to limit the amount of the air that is taken in. The intake air shutter 22 is maintained fully opened during the high-load operation. Further, an exhaust gas shutter 23 is disposed in the exhaust gas passage 7 downstream of a portion where the EGR passage 9 is coupled to limit the flow out of the exhaust gas. Like the intake air shutter 22, the exhaust gas shutter 23 is maintained fully opened during the high-load operation. The intake air shutter 22 and the exhaust air shutter 23 are equipped with negative-pressure actuators connected to a negative-pressure tank that is not shown, and are controlled for their opening degrees as the negative pressure fed depending upon the operation conditions is controlled by the control unit 10.

The diesel engine of the present invention executes the homogeneous charge compression ignition, i.e., the HCCI combustion in the region of low exhaust gas temperatures, and is equipped with the fuel injection device which is a common-rail type fuel injection device for injecting the fuel from a common rail of a high pressure while controlling the fuel injection valve provided for each of the cylinders by an electromagnetic valve 18. Therefore, in addition to controlling the EGR valve 11, change-over valve 102, urea injector 141, intake air shutter 22 and exhaust gas shutter 23, the control unit 10 of the diesel engine controls the electromagnetic valves 18 based upon the detection signals from an engine rotational speed sensor 15 that detects the rotational speed of the engine, an accelerator sensor 16 that detects the amount the accelerator pedal is depressed (accelerator opening degree) and an intake air temperature sensor 17 that is disposed in the intake airmanifold 3 and detects the temperature of the air taken into the cylinders, in order to control the amount of fuel injected into the cylinders and the timing of injection. The control unit 10 is equipped with a memory for setting the amount of fuel injection using the engine rotational speed and the accelerator opening degree as parameters, and determines a basic amount of fuel injection relying on the engine rotational speed and the amount the accelerator pedal is depressed. The basic amount of fuel injection is corrected based on the values detected by the intake air temperature sensor 17 and the like sensors to thereby determine a ultimate amount of fuel injection.

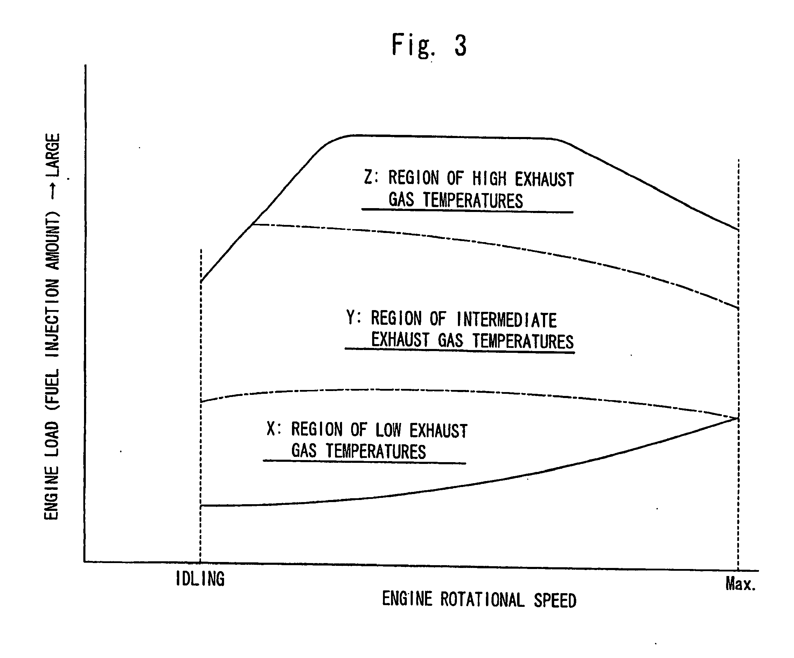

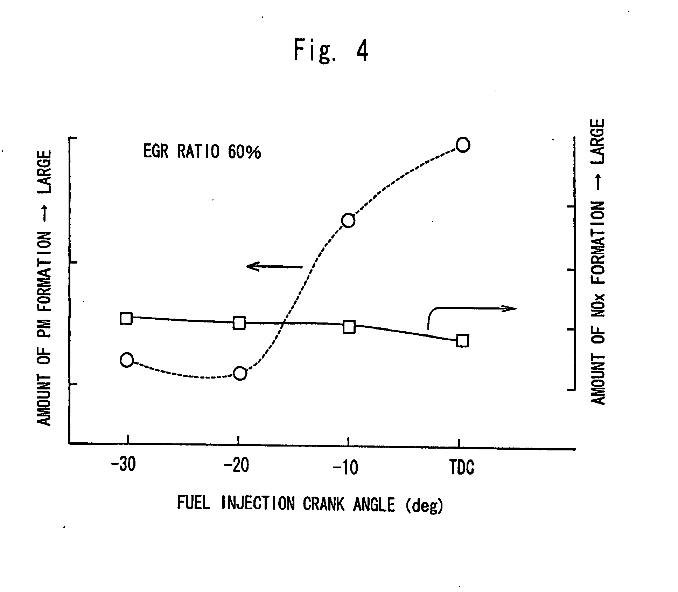

Next, described below is the operation of the diesel engine of this embodiment equipped with the above-mentioned various devices with reference also to Figs. 3 and 4.

The diesel engine mounted on a vehicle varies its rotational speed and load from moment to moment depending upon the operation conditions, and the temperature of the exhaust gas emitted therefrom also varies depending upon the operation conditions. Fig. 3 shows the temperature regions of the exhaust gas with the engine rotational speed and the engine load (amount of fuel injection) as parameters. In the operation condition where the engine bears a low load and, particularly, the rotational speed is low, i.e., in a region X of low exhaust gas temperatures, the exhaust gas temperature is not reaching the activating temperature region (about 250°C to about 400°C) , and NO is not sufficiently oxidized into NO₂ by the oxidizing catalyst. Even if the exhaust gas temperature in the exhaust gas outlet may be reaching the activating temperature region of the catalyst, heat is radiated to the external air while the exhaust gas flows from the exhaust gas manifold into the oxidizing catalyst and, as a result, the temperature often fails to reach the activating temperature region.

In order to solve the above problem, the diesel engine of the invention closes the change-over valve 102 so that the exhaust gas flows into the by-path 101 and into the second continuously regenerating DPF 13 in the region X of low exhaust gas temperatures where the exhaust gas temperature of the engine is below about 250°C like the one disclosed in the above JP-A-2005-163630. The second continuously regenerating DPF 13 is disposed near the exhaust gas manifold 4 upstream of the first continuously regenerating DPF 12. Therefore, the exhaust gas passing therethrough is not cooled and, besides, the catalyst has a small capacity and a small heat capacity, and is easily heated to a high temperature. This makes it possible to maintain the oxidizing catalyst within a range of activating temperatures, and the second continuously regenerating DPF 13 efficiently traps the PM and is efficiently regenerated.

In the region X of low exhaust gas temperatures, however, the fuel is injected in small amounts into the cylinders of the engine and the combustion temperature is relatively low. Therefore, the PM tends to be formed in increased amounts. The second continuously regenerating DPF 13 has a small capacity, is liable to be loaded if the PM generates in large amounts, and may be damaged by the combustion of PM that has deposited.

The diesel engine of the present invention executes the HCCI combustion by compressing the fuel in a state of being mixed with the air in advance and, thereafter, effecting the ignition by compression in the region X of low exhaust gas temperatures. That is, the timing is advanced for injecting the fuel into the cylinders and, at the same time, the EGR valve 11 is opened to recirculate the cooled exhaust gas into the cylinders in order to prevent the injected fuel from being ignited too early. Referring to Fig. 4, when the fuel injection timing is advanced to be, particularly 30° to 20° ahead of the top dead center in the presence of large amounts of exhaust gas by the EGR, the fuel is mixed with the air to a sufficient degree before being ignited by compression, and the combustion quickly completes after ignited. Therefore, formation of the unburned components such as PM greatly decreases. As a result, the PM is trapped in very decreased amounts by the second continuously regenerating DPF 13 in the region of low exhaust gas temperatures; i.e., even the DPF having a small capacity is capable of trapping the PM to a sufficient degree.

In the diesel engine of the present invention, further, the exhaust valve 40 is slightly opened during the intake stroke by the exhaust gas introduction cam profile 422 formed on the exhaust cam 42, and the exhaust gas in the exhaust gas outlet flows reverse into the cylinder to effect the internal EGR. The exhaust gas has a high temperature, contains combustion intermediate products right after the exhaust gas outlet, and stays near the cylinder head over the combustion chamber. In the region X of low exhaust gas temperatures, therefore, the HCCI combustion of the invention promotes the combustion after the mixture that is mixed in advance is ignited forming the PM in further reduced amounts. Upon executing the cool EGR and internal EGR in the region X of low exhaust gas temperatures, formation of the NOx is further suppressed, and there is no need of activating the urea-added SCR catalyst 14 disposed in the exhaust gas passage 7.

The diesel engine of this embodiment is equipped with the intake air shutter 22 for squeezing the intake air and with the exhaust gas shutter 23 for squeezing the exhaust gas. When the temperature of the exhaust gas is in the region X of low exhaust gas temperatures, the intake air shutter 22 is squeezed to limit the amount of the intake air. The temperature of the exhaust gas increases with a decrease in the excess air ratio (λ) during the combustion in the cylinder. By decreasing the amount of the air taken in by the cylinder, therefore, the temperature of the exhaust gas can be heightened in the region of low exhaust gas temperatures. Though a decrease in the amount of the intake air is accompanied by a decrease in the initial pressure of the air taken in the cylinder, the exhaust gas shutter 23 is squeezed to prevent a decrease in the pressure to thereby prevent a decrease in the combustion temperature that stems from a decrease in the effective compression ratio. Therefore, even in an operation region of low rotational speeds and low loads where the temperature of the exhaust gas could not have reached a region for activating the oxidizing catalyst, execution of the above control makes it possible to quickly elevate the temperature of the exhaust gas to the region of activating temperatures.

Next, described below is the operation in an operation region where the temperature of the exhaust gas rises in excess of the region X of low exhaust gas temperatures. The diesel engine of this embodiment executes the control by basically dividing the region of exhaust gas temperatures higher than the region of low exhaust gas temperatures into a region Y of intermediate exhaust gas temperatures and a region Z of high exhaust gas temperatures.

As the temperature of the exhaust gas becomes higher than about 250°C which is in excess of the region X of low exhaust gas temperatures due to an increase in the amount of injecting the fuel into the diesel engine, the temperature of the oxidizing catalyst 121 in the first continuously regenerating DPF 12 reaches the region of activating temperatures to a sufficient degree. The flow rate of the exhaust gas increases, too. Therefore, the change-over valve 102 is opened to a large degree so that the PM is substantially trapped by the first continuously regenerating DPF 12 of a large capacity while the exhaust gas is permitted to flow in decreased amounts into the second continuously regenerating DPF 13.

In the region Y of intermediate exhaust gas temperatures where the temperature of the exhaust gas is about 250°C to about 400°C, the combustion temperature in the cylinder is further elevated and NOx generates in increased amounts. In this region, therefore, the EGR valve 11 is opened to an increased degree, and the intake air shutter 22 and the exhaust gas shutter 23 are half-opened to a degree of about 50%. Therefore, the pressure differential of exhaust gas increases between the outlet and the inlet of the EGR passage 9, the amount of the exhaust gas increases that is cooled through the cooler 200 and is recirculated into the intake air passage 5, and NOx generates in decreased amounts.

In the region Y of intermediate exhaust gas temperatures in the invention, therefore, the NOx is reduced and decomposed by the urea-added SCR catalyst 14 disposed in the exhaust gas passage 7 in order to further reduce the amount of NOx that is emitted. Namely, responsive to an instruction from the control unit 10, the urea injector 141 sprays the urea water which is a reducing agent by utilizing the compressed air, so that the NOx is reduced and decomposed by the urea-added SCR catalyst 14.

In the region Y of intermediate exhaust gas temperatures; the ordinary injection is effected by injecting the fuel near the top dead center, and the HCCI combustion in which the fuel is injected at an early timing is discontinued to conduct the diffused combustion system. However, the diesel engine of this embodiment executes a pilot injection to inject the fuel in small amounts prior to the main injection that is effected near the top dead center. It is desired that the pilot injection is effected at a moment 10 to 20° ahead of the main injection. This makes it possible to realize a combustion with less noise forming PM and NOx in decreased amounts yet maintaining a favorable thermal efficiency.

In the operation region near the full load where the amount of fuel injection into the diesel engine has further increased, the temperature of the exhaust gas is further elevated to not lower than about 400°C and shifts to the region Z of high exhaust gas temperatures. In this region, too, the change-over valve 102 is opened and the PM is trapped by the first continuously regenerating DPF 12. As the temperature of the exhaust gas exceeds about 400°C, the trapped PM is oxidized with oxygen in the exhaust gas and burns compounded by the oxidizing action of the oxidizing catalyst 121. Therefore, the regeneration of the DPF 121 in the first continuously regenerating DPF 12 is accomplished even under a condition where no NOx is present as the oxidizing agent.

In the region of high exhaust gas temperatures, too, the urea-added SCR catalyst 14 is activated to reduce and decompose the NOx, and the fuel is injected into the cylinder being divided into the main injection and the pilot injection like in the region Y of intermediate exhaust gas temperatures. In this region, however, the intake air shutter 22 and the exhaust gas shutter 23 are fully opened to increase the output of the diesel engine and to avoid a decrease in the fuel efficiency.

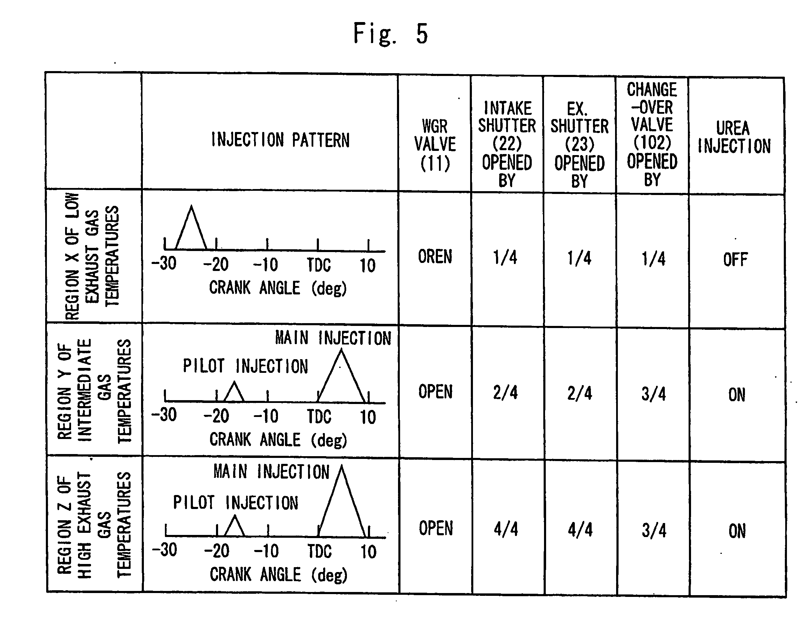

Fig. 5 is a Table summarizing the operation control modes of the diesel engine according to the invention. Fig. 5 shows representative fuel injection patterns and opening degrees of the intake air shutter and the like, which, however, may successively vary depending upon the characteristics and operation conditions of the engine, as a matter of course. The device is controlled by the control unit 10. Here, the control unit 10 is storing a map for deciding a region of exhaust gas temperatures shown in Fig. 3 to decide the region of the present exhaust gas temperature based on the engine load (amount of fuel injection) and the engine rotational speed. Boundary lines among the temperature regions X, Y and Z in the map are determined through experiment by making reference to the activating temperature regions of the oxidizing catalyst in the continuously regenerating DPF.

The control unit 10 reads an engine rotational speed signal and an accelerator opening signal from the engine rotational speed sensor 15 and the accelerator sensor 16, decides the amount of fuel injection in compliance with the fuel injection map stored in the control unit 10, and decides the exhaust gas temperature region in compliance with the map for deciding the exhaust gas temperature region. The control unit 10 executes the control shown in Fig. 5 depending upon the exhaust gas temperature region. Here, the exhaust gas temperature may be directly detected by using an exhaust gas temperature sensor 210 provided in the exhaust gas pipe 7 of the engine instead of using the map for deciding the exhaust gas temperature region.

### Industrial Applicability.

As described above in detail, the present invention is concerned with a diesel engine which traps the PM by the second continuously regenerating DPF disposed in the by-path in the operation region where the exhaust gas temperature is low, wherein the urea-added SCR catalyst is disposed in the exhaust gas system of the engine to reliably reduce the NOx and in the operation region where the exhaust gas temperature is low, at the same time, the PM is reduced by utilizing the homogeneous charge compression ignition technology. It is therefore obvious that the present invention can be favorably utilized for a diesel engine mounted on a vehicle and can be, further, applied to diesel engines for general industries. In the above embodiment, the continuously regenerating DPF includes the oxidizing catalyst and the DPF which are separate from each other. It is, however, obvious that the diesel engine of the invention may employ a continuously regenerating DPF which is integrally constituted by directly carrying a material that serves as an oxidizing catalyst on the DPF, or a continuously regenerating DPF constituted by carrying a NOx occluding and reducing catalyst on the DPF. Further, it needs not be pointed out that the invention can be variously modified such as employing a fuel injection device of the type other than the common-rail type, disposing the urea-added SCR catalyst downstream of the first continuously regenerating DPF, and so on.

## Claims

1. Device for purifying exhaust gas of a diesel engine comprising:
a first continuously regenerating DPF (12) disposed in the exhaust gas passage (7) of the engine, a second continuously regenerating DPF (13) disposed in a by-path (101) by-passing the exhaust gas passage on the upstream of said first continuously regenerating DPF (12) and having a capacity smaller than that of said first continuously regenerating DPF (12), and a change-over valve (102) disposed in the exhaust gas passage between the outlet and the inlet of said by-path (101) to change over the flow passage of the exhaust gas; and
an EGR device for recirculating the cooled exhaust gas into the intake passage (5) of the engine through an EGR valve (11) that controls the recirculating amount of the exhaust gas and a cooler (200) that cools the exhaust gas, and an exhaust gas introduction mechanism (41, 422) which enables the exhaust gas outlet of the engine to be communicated with the cylinders of the engine for a short period of time in the engine intake stroke;
wherein, in a region (X) of low exhaust gas temperatures where the engine exhaust gas temperature is low, the opening degree of said change-over valve (102) is decreased so that the exhaust gas flows into said second continuously regenerating DPF (13);
and wherein, a device for purifying exhaust gas of the diesel engine is **characterized in that**:
in said region (X) of low exhaust gas temperatures, the timing for injecting the fuel into said diesel engine is advanced ahead of the injection timing in other temperature regions and said EGR valve (11) is opened to recirculate the exhaust gas from said EGR device and from said exhaust gas introduction mechanism (41, 422); and
an NOx-reducing catalytic device (14) equipped with a urea-feeding device is disposed in said exhaust gas passage (7), and urea is fed to the NOx-reducing catalytic device (14) in the regions other than said region (X) of low exhaust gas temperatures.

2. The device for purifying exhaust gas of the diesel engine according to claim 1, wherein the diesel engine is equipped with a common-rail type fuel injection device and in said region (X) of low exhaust gas temperatures, the timing for injecting the fuel into said diesel engine is set in a range of 30° to 20° ahead of the top dead center.

3. The device for purifying exhaust gas of the diesel engine according to claim 1, wherein the diesel engine is equipped with a common-rail type fuel injection device and in the regions other than said region (X) of low exhaust gas temperatures, the main injection is executed to said diesel engine near the top dead center and a pilot injection is executed at a moment 10° to 20° ahead of the main injection.

4. The device for purifying exhaust gas of the diesel engine according to claim 1, wherein said NOx-reducing catalyst device (14) is disposed in said exhaust gas passage (7) upstream of said first continuously regenerating DPF (12) but downstream of said second continuously regenerating DPF (13).

5. The device for purifying exhaust gas of the diesel engine according to claim 1, wherein the diesel engine has an intake air shutter (22) and an exhaust gas shutter (23) disposed in the intake air passage (5) and in the exhaust gas passage (7), and in said region (X) of low exhaust gas temperatures, the opening degrees of the intake air shutter (22) and of the exhaust gas shutter (23) are decreased to squeeze the intake air passage (5) and the exhaust gas passage (7).

6. The device for purifying exhaust gas of the diesel engine according to claim 5, wherein the opening degree of said change-over valve (102) is increased in the regions other than said region (X) of low exhaust gas temperatures, the opening degrees of said intake air shutter (22) and of said exhaust gas shutter (23) are increased to become larger than those in said region (X) of low exhaust gas temperatures in a region (Y) of intermediate exhaust gas temperatures where the exhaust gas temperature of the engine is higher than that in said region (X) of low exhaust gas temperatures, and said intake air shutter (22) and said exhaust gas shutter (23) are fully opened in a region (Z) of high exhaust gas temperatures where the exhaust gas temperature of the engine is in excess of that in said region (Y) of intermediate exhaust gas temperatures.

## Patentansprüche

1. Vorrichtung zum Reinigen des Abgases eines Dieselmotors, mit:
einem ersten kontinuierlich regenerierenden DPF (12), das im Abgasdurchgang (7) des Motors angeordnet ist, einem zweiten kontinuierlich regenerierenden DPF (13), das in einem Seitenweg (101) angeordnet ist, der den Abgasdurchgang stromaufwärts des ersten kontinuierlich regenerierenden DPF (12) umgeht, und das eine Kapazität aufweist, die kleiner als diejenige des ersten kontinuierlich regenerierenden DPF (12) ist, und einem Umschaltventil (102), das im Abgasdurchgang zwischen dem Auslass und dem Einlass des Seitenwegs (101) angeordnet ist, um den Strömungsdurchgang des Abgases umzustellen; und
einer AGR-Vorrichtung zum Rückführen des abgekühlten Abgases in den Ansaugdurchgang (5) des Motors durch ein AGR-Ventil (11), das die Rückführmenge des Abgases steuert, und einen Kühler (200), der das Abgas abkühlt, und einem Abgaseinbringmechanismus (41, 422), der es ermöglicht, dass der Abgasauslass des Motors mit den Zylindern des Motors während einer kurzen Zeitspanne im Motoransaughub verbunden ist;
wobei in einem Bereich (X) niedriger Abgastemperaturen, wo die Motorabgastemperatur niedrig ist, der Öffnungsgrad des Umschaltventils (102) verringert ist, so dass das Abgas in das zweite kontinuierlich regenerierende DPF (13) strömt;
und wobei eine Vorrichtung zum Reinigen des Abgases des Dieselmotors **dadurch gekennzeichnet ist, dass**:
in dem Bereich (X) niedriger Abgastemperaturen die Zeitsteuerung zum Einspritzen des Kraftstoffs in den Dieselmotor vor der Einspritzzeitsteuerung in anderen Temperaturbereichen eingestellt ist und das AGR-Ventil (11) geöffnet wird, um das Abgas von der AGR-Vorrichtung und von dem Abgaseinbringmechanismus (41, 422) rückzuführen; und
eine NOx-reduzierende Katalysatorvorrichtung (14), die mit einer Harnstoffzufuhreinrichtung ausgestattet ist, in dem Abgasdurchgang (7) angeordnet ist und Harnstoff in den Bereichen außer dem Bereich (X) niedriger Abgastemperaturen in die NOx-reduzierende Katalysatorvorrichtung (14) eingespeist wird.

2. Vorrichtung zum Reinigen des Abgases des Dieselmotors nach Anspruch 1, wobei der Dieselmotor mit einer Gemeinsame-Kraftstoffleitungs-Typ-Kraftstoffeinspritzvorrichtung ausgestattet ist und in dem Bereich (X) niedriger Abgastemperaturen die Zeitsteuerung zum Einspritzen des Kraftstoffs in den Dieselmotor in einem Bereich von 30° bis 20° vor dem oberen Totpunkt eingestellt ist.

3. Vorrichtung zum Reinigen des Abgases des Dieselmotors nach Anspruch 1, wobei der Dieselmotor mit einer Gemeinsame-Kraftstoffleitungs-Typ-Kraftstoffeinspritzvorrichtung ausgestattet ist und in den Bereichen außer dem Bereich (X) niedriger Abgastemperaturen die Haupteinspritzung in den Dieselmotor nahe dem oberen Totpunkt ausgeführt wird und eine Voreinspritzung in einem Moment ausgeführt wird, der 10° bis 20° vor der Haupteinspritzung liegt.

4. Vorrichtung zum Reinigen des Abgases des Dieselmotors nach Anspruch 1, wobei die NOx-reduzierende Katalysatorvorrichtung (14) in dem Abgasdurchgang (7) stromaufwärts des ersten kontinuierlich regenerierenden DPF (12), aber stromabwärts des zweiten kontinuierlich regenerierenden DPF (13) angeordnet ist.

5. Vorrichtung zum Reinigen des Abgases des Dieselmotors nach Anspruch 1, wobei der Dieselmotor eine Ansaugluftverschlussklappe (22) und eine Abgasverschlussklappe (23) aufweist, die im Ansaugluftdurchgang (5) und im Abgasdurchgang (7) angeordnet sind, und im Bereich (X) niedriger Abgastemperaturen die Öffnungsgrade der Ansaugluftverschlussklappe (22) und der Abgasverschlussklappe (23) verringert werden, um den Ansaugluftdurchgang (5) und den Abgasdurchgang (7) zu quetschen.

6. Vorrichtung zum Reinigen des Abgases des Dieselmotors nach Anspruch 5, wobei der Öffnungsgrad des Umschaltventils (102) in den Bereichen außer dem Bereich (X) niedriger Abgastemperaturen, die Öffnungsgrade der Ansaugluftverschlussklappe (22) und der Abgasverschlussklappe (23) erhöht werden, damit sie größer als diejenigen im Bereich (X) niedriger Abgastemperaturen in einem Bereich (Y) mittlerer Abgastemperaturen werden, wo die Abgastemperatur des Motors höher als diejenige im Bereich (X) niedriger Abgastemperaturen ist, und die Ansaugluftverschlussklappe (22) und die Abgasverschlussklappe (23) in einem Bereich (Z) hoher Abgastemperaturen, wo die Abgastemperatur des Motors diejenige des Bereichs (Y) mittlerer Abgastemperaturen übersteigt, vollständig geöffnet sind.

## Revendications

1. Epurateur des gaz d'échappement pour moteur diesel comprenant :
un premier filtre à particules diesel à régénération continue (12) disposé dans le passage des gaz d'échappement (7) du moteur, un second filtre à particules diesel à régénération continue (13) disposé dans un chemin secondaire (101) contournant le passage des gaz d'échappement en amont dudit premier filtre à particules diesel à régénération continue (12) et ayant une capacité inférieure à celle dudit premier filtre à particules diesel à régénération continue (12), et une soupape de permutation (102) disposée dans le passage des gaz d'échappement entre la sortie et l'entrée dudit chemin secondaire (101) pour permuter le passage d'écoulement des gaz d'échappement ; et
un dispositif de recirculation des gaz d'échappement permettant de faire recirculer les gaz d'échappement refroidis dans le passage d'admission (5) du moteur grâce à une soupape de recirculation des gaz d'échappement (11) qui commande la quantité de recirculation des gaz d'échappement et à un refroidisseur (200) qui refroidit les gaz d'échappement, et un mécanisme d'introduction des gaz d'échappement (41, 422) qui permet à la sortie des gaz d'échappement du moteur de communiquer avec les cylindres du moteur pendant une courte période de temps lors de la course d'admission du moteur ;
dans lequel, dans une zone (X) de faibles températures des gaz d'échappement où la température des gaz d'échappement du moteur est faible, le degré d'ouverture de ladite soupape de permutation (102) est réduit pour permettre aux gaz d'échappement de s'écouler dans ledit second filtre à particules diesel à régénération continue (13) ;
et dans lequel, un épurateur des gaz d'échappement pour moteur diesel est **caractérisé en ce que** :
dans ladite zone (X) de faibles températures des gaz d'échappement, le calage de l'injection de carburant dans ledit moteur diesel est avancé par rapport au calage de l'injection dans les autres zones de températures, et ladite soupape de recirculation des gaz d'échappement (11) est ouverte pour faire recirculer les gaz d'échappement à partir dudit dispositif de recirculation des gaz d'échappement et à partir dudit mécanisme d'introduction des gaz d'échappement (41, 422) ; et
un dispositif catalytique de réduction du NOx (14) équipé d'un dispositif de distribution d'urée est disposé dans ledit passage des gaz d'échappement (7), et l'urée est distribuée au dispositif catalytique de réduction du NOx (14) dans les zones autres que ladite zone (X) de faibles températures des gaz d'échappement.

2. L'épurateur des gaz d'échappement pour moteur diesel selon la revendication 1, dans lequel le moteur diesel est équipé d'un dispositif d'injection de carburant de type à rampe commune et dans ladite zone (X) de faibles températures des gaz d'échappement, le calage de l'injection de carburant dans ledit moteur diesel est réglé entre 30° et 20° avant le point mort haut.

3. L'épurateur des gaz d'échappement pour moteur diesel selon la revendication 1, dans lequel le moteur diesel est équipé d'un dispositif d'injection de carburant de type à rampe commune et dans les zones autres que ladite zone (X) de faibles températures des gaz d'échappement, l'injection principale est exécutée dans ledit moteur diesel près du point mort haut et une injection pilote est exécutée à un moment située entre 10° et 20° avant l'injection principale.

4. L'épurateur des gaz d'échappement pour moteur diesel selon la revendication 1, dans lequel ledit dispositif catalytique de réduction du NOx (14) est disposé dans ledit passage des gaz d'écoulement (7) en amont dudit premier filtre à particules diesel à régénération continue (12) mais en aval dudit second filtre à particules diesel à régénération continue (13).

5. L'épurateur des gaz d'échappement pour moteur diesel selon la revendication 1, dans lequel le moteur diesel possède un volet obturateur d'air d'admission (22) et un volet obturateur de gaz d'échappement (23) disposés dans le passage d'air d'admission (5) et dans le passage des gaz d'échappement (7), et dans ladite zone (X) de faibles températures des gaz d'échappement, les degrés d'ouverture du volet obturateur d'air d'admission (22) et du volet obturateur de gaz d'échappement (23) sont réduits pour comprimer le passage d'air d'admission (5) et le passage des gaz d'échappement (7).

6. L'épurateur des gaz d'échappement pour moteur diesel selon la revendication 5, dans lequel le degré d'ouverture de ladite soupape de permutation (102) est augmenté dans les zones autres que ladite zone (X) de faibles températures des gaz d'échappement, les degrés d'ouverture dudit volet obturateur d'air d'admission (22) et dudit volet obturateur de gaz d'échappement (23) sont augmentés pour devenir supérieurs aux degrés d'ouverture dans ladite zone (X) de faibles températures des gaz d'échappement dans une zone (Y) de températures intermédiaires des gaz d'échappement où la température des gaz d'échappement du moteur est supérieure à celle dans ladite zone (X) de faibles températures des gaz d'échappement, et ledit volet obturateur d'air d'admission (22) et ledit volet obturateur des gaz d'échappement (23) sont entièrement ouverts dans une zone (Z) de températures élevées des gaz d'échappement où la température des gaz d'échappement du moteur dépasse celle dans ladite zone (Y) de températures intermédiaires des gaz d'échappement.
